# EUROPÄISCHE PATENTSCHRIFT

(11) **EP 3 389 357 B1**
(45) Veröffentlichungstag und Bekanntmachung des Hinweises auf die Patenterteilung: **22.03.2023**
(21) Anmeldenummer: 16826307.7
(22) Anmeldetag: 19.12.2016
(51) Int. Cl.: A01G 25/09, A01G 20/30, A01G 9/24

(54) **ANLAGE ZUR BELICHTUNG VON GROSSEN RASENFLÄCHEN**
SYSTEM FOR ILLUMINATION OF LARGE LAWNS
DISPOSITIF D'ÉCLAIRAGE DE GRANDES SURFACES DE GAZON

(30) Priorität: 18.12.2015 DE 102015016491; 18.12.2015 DE 202015008699 U
(43) Veröffentlichungstag der Anmeldung: 24.10.2018
(73) Patentinhaber: Rhenac Greentec AG, 53773 Hennef (DE)
(72) Erfinder: THEISEN, Horst, 53117 Bonn (DE)
(74) Vertreter: Fritzsche, Thomas
(86) Internationale Anmeldenummer: PCT/EP2016/081815
(87) Internationale Veröffentlichungsnummer: WO 2017/103288

(56) Entgegenhaltungen:
- EP-A1- 2 710 884
- WO-A1-00/57689
- WO-A1-2015/028883
- US-A1- 2001 035 468

## Beschreibung

Die Erfindung betrifft eine Anlage zur Belichtung für großflächige Rasenabschnitte wie beispielsweise Fußballfelder oder dergleichen, umfassend mindestens einen beweglichen Träger, an welchem Beleuchtungselemente angebracht sein können.

Bewässerungs- und/oder Belichtungssysteme zur Rasenpflege und Rasenregeneration sind bereits bekannt. EP 2 710 884 A1 offenbart ein gattungsgemäßes Belichtungssystem, WO 00/57689 A1 offenbart ein gattungsgemäßes Bewässerungs- und Belichtungssystem zur Rasenpflege und Rasenregeneration.

Beispielsweise werden derartige Systeme in Fußballstadien oder Arenen eingesetzt, um die Bespielbarkeit des Rasens und dessen Qualität zu gewährleisten. Hierbei handelt es sich meistens um mobile Belichtungssysteme, welche flexibel dort, wo belichtet werden soll, auf dem Platz positioniert werden können. Diese mobilen Belichtungssysteme weisen jedoch dabei meist eine breite Gummibereifung auf, was wiederum Schäden am Rasen verursachen kann. Mit einer speziellen Gummibereifung können die Schäden am Rasen zwar minimiert, aber nicht gänzlich vermieden werden. Die Schäden am Rasen können zum einen dadurch zustande kommen, dass das mehrere Tonnen schwere Gewicht der Trägersysteme Löcher in den Sportrasen drückt bzw. bei längerem Stehenlassen dunkle bzw. braune Flecken entstehen. Weiter kann der Rasen nicht optimal belichtet werden, da Schatten auftreten, welche durch die Räder oder die darauf befindlichen Träger erzeugt werden. Außerdem sind Pflegemaßnahmen des Rasens während der Belichtung meistens gar nicht bzw. nur schwer durchzuführen. Einen weiteren Nachteil, welche mobile Belichtungseinheiten aufweisen, ist der, dass die einzelnen Einheiten mittels Zugmaschinen oder Traktoren oder ähnlichen Maschinen in verschiedene Positionen gebracht werden müssen, um die Belichtung an bestimmten Abschnitten des Rasens durchzuführen. Darüber hinaus müssen dann die Leuchtmittel manuell bzw. halbautomatisch ausgerichtet werden.

Bei derzeitigen Bewässerungssystemen erfolgt die Bewässerung der Rasenfläche meist über herkömmliche Sprinkleranlagen, die den Wasserstrahl halbkreisförmig in einem hohen Bogen über den Platz leiten oder einen feinen Sprühnebel erzeugen.

Dies hat jedoch zum Nachteil, dass nicht immer eine präzise Bewässerung der Rasenfläche gewährleistet werden kann, da der Strahl je nach Windverhältnissen mehr oder weniger stark abgelenkt wird. Auch werden aufgrund der begrenzten Reichweite der Wasserstrahlen und der festen Montagepunkte der Sprinkleranlagen bestimmte Rasenflächen nicht oder mit zu geringen Wassermengen versorgt.

Eine Aufgabe der Erfindung besteht darin, die Nachteile herkömmlicher Bewässerungs-/Belichtungssysteme zu überwinden, insbesondere soll die erfindungsgemäße Anlage zur Belichtung eine optimale Belichtung der Rasenfläche gewährleisten, d. h., dass Druckstellen oder Schattenstellen bei oder während der Belichtung vermieden werden sollen. Eine weitere Aufgabe der Erfindung besteht darin, eine optimale Bewässerung und/oder Düngung der Rasenfläche zu gewährleisten. Weiter soll die Anlage zeit- und personalsparend auf- und abgebaut werden.

Die Aufgabe wird durch eine erfindungsgemäße Anlage zur Bewässerung gemäß Anspruch 1 gelöst. In den Unteransprüchen sind vorteilhafte Weiterbildungen und bevorzugte Ausführungsformen angegeben.

Erfindungsgemäß wird eine Anlage zur Belichtung von großflächigen Rasenabschnitten wie Fußballfeldern oder dergleichen zur Verfügung gestellt, welche mindestens einen beweglichen Träger umfasst, an welchem Beleuchtungselementen angebracht werden können.

Dabei befindet sich der Träger bei einer vorgesehenen Arbeitsposition 1 oberhalb der Rasenoberfläche und über dem Rasenabschnitt. Der Träger weist ein Querelement auf, welches sich über der Rasenfläche befindet, sie jedoch nicht berührt, wenn der Träger sich in einer vorgesehenen Arbeitsposition 1 befindet. Weiter weist der Träger zwei zur Rasenfläche senkrechte Elemente auf, die das Querelement tragen. Das Querelement verläuft hierbei über die gesamte Breite des Rasenabschnittes und der Träger ist längsseits des Rasenabschnittes beweglich angeordnet, derart, dass der Träger bei längsseitiger Bewegung den Rasen nicht berührt. Erfindungsgemäß umfasst der Träger eine Belichtungsvorrichtung mit mindestens einem Klappträger, der sich in ausgeklapptem Zustand in einem 90° Winkel zum Querelement des Trägers befindet.

Befindet sich die erfindungsgemäße Anlage nicht in einer vorgesehenen Arbeitsposition, so kann der Träger in eine dafür vorgesehene Ruheposition außerhalb des Rasenabschnittes gebracht werden.

Das grundlegende Konzept der erfindungsgemäßen Anlage sieht vor, dass, wenn sich der Träger in einer vorgesehenen Arbeitsposition 1 oberhalb bzw. über der Rasenoberfläche befindet, bei Bewegung des Trägers längsseitig des Rasenabschnitts der Rasenabschnitt hierbei eben nicht berührt wird und somit keine Schäden durch beispielsweise Druckstellen von Reifen oder dergleichen auftreten können. Die Funktion der erfindungsgemäßen Anlage ist mit der einer KFZ-Waschstraße vergleichbar, bei welcher beispielsweise am Ende ein (Heiß)-Luftgebläse Wasser vom Kraftfahrzeug entfernt, wobei das Heizgebläse über das Kraftfahrzeug hinwegfährt, dieses jedoch dabei nicht berührt. Die erfindungsgemäße Anlage ist hierbei vollautomatisch oder zumindest halbautomatisch steuerbar. Hierbei kann beispielsweise eine speicherprogrammierbare Steuerung (SPS) eingesetzt werden. Eine automatische Steuerung der Anlage hat zum einen den Vorteil, dass dadurch die Auf- und Abbauzeit der Anlage reduziert werden kann. Ein zeitaufwendiges Hin- und Herbewegen der Anlage in verschiedene Belichtungspositionen mittels Zugmaschinen oder Traktoren ist somit nicht nötig. Die Anlage bzw. der Träger kann dabei motorisiert und/oder manuell bewegt werden. Generell ist eine motorisierte Steuerung der Anlage bevorzugt vorgesehen, jedoch kann im Fall einer Störung beispielsweise bei Stromausfall oder dergleichen ebenfalls auf eine manuelle Steuerung der Anlage zurückgegriffen werden.

Insbesondere dient die Anlage zur Belichtung für großflächige Rasenabschnitte, wie beispielsweise Fußballfelder, Tennisfelder, American Football-Felder oder dergleichen. Andere Anwendungen, bei welchen die erfindungsgemäße Anlage sich eignet und somit eingesetzt werden kann, sind nicht von der Erfindung ausgeschlossen. Beispielsweise kann die Anlage auch im Bereich der Landwirtschaft oder des Indoor-Farming Anwendung finden.

Erfindungsgemäß umfasst die Anlage einen Träger oder Hauptträger, welcher aus einem Querelement und zwei das Querelement tragenden senkrechten Elementen aufgebaut ist. Der Hauptträger kann dabei als Gitterträger mit einer Rohrrahmenkonstruktion aus Stahl aufgebaut sein. Selbstverständlich können auch andere Materialien, wie andere Metalle, Kunststoffe, Verbundstoffe, Holz, Carbon oder eine Verbindung dieser Materialien verwendet werden, soweit diese die erforderlichen statischen Eigenschaften und Erfordernisse aufweisen, damit der Träger frei über der Rasenfläche bewegbar angeordnet werden kann.

Gemäß einer vorteilhaften Ausführungsform der erfindungsgemäßen Anlage umfasst diese mindestens einen am Ende einer Seite des Rasenabschnittes oder des Spielfeldabschnittes im Boden versenkbaren Träger. Bei einer vorgesehenen Ruheposition 0 befindet sich dabei der Träger unterhalb der Rasenoberfläche und bei einer vorgesehenen Arbeitsposition 1 befindet sich der Träger dagegen oberhalb der Rasenoberfläche und über dem Rasenabschnitt. Bevorzugterweise ist hierbei ein Tunnelschacht vorgesehen, beispielsweise aus Stahlbeton oder einem anderen geeigneten Material. Gemäß einer vorteilhaften Ausführungsform der erfindungsgemäßen Anlage kann der Tunnelschacht dabei als sogenannte "weiße Wanne" aufgebaut sein, d. h. die Außenwände und die Bodenplatte werden dabei unter anderem mit wasserundurchlässigem Beton hergestellt, wodurch keine zusätzliche Abdichtung und auch unter Umständen keine Drainagen benötigt werden, um das Eindringen von Grund- und Sickerwasser zu verhindern. Bevorzugt weist der Tunnelschacht eine Schachtabdeckung auf, welche beispielsweise aus befahrbarem Stahlblech gebildet sein kann. Die Schachtabdeckung kann hydraulisch und/oder mechanisch vollautomatisch und/oder halbautomatisch geöffnet bzw. geschlossen werden. Der Tunnelschacht hat zum einen den Vorteil, dass der Träger in eine Parkposition oder Ruheposition 0 gebracht werden kann und somit optisch aus dem Sichtfeld beispielsweise bei Sportereignissen oder dergleichen verschwindet, zum anderen ist der Träger durch Unterbringung im Tunnelschacht ebenfalls vor Witterungseinflüssen geschützt. Vorteilhafterweise kann die Schachtabdeckung mit Rasen oder Kunstrasen bedeckt werden, was der ästhetischen oder architektonischen Darstellung der gesamten Rasenfläche bzw. des Stadions oder der Arena zugutekommt. Vorteilhaft weist der Tunnelschacht Hubsegmente auf, welche den Träger von seiner Ruheposition oder Parkposition 0 in seine vorgesehene Arbeitsposition oberhalb der Rasenfläche bringen. Bevorzugt befinden sich die Hubsegmente im linken bzw. rechten Teil des Tunnelschachtes. Die Hubsegmente können hierbei beispielsweise hydraulisch betrieben Hubsegmente darstellen. Der Tunnelschacht befindet sich bevorzugt an einer Seite des Rasenabschnittes. Insbesondere bevorzugt bei einem Fußballfeld befindet sich der Tunnelschacht hinter dem Torraum bzw. dem Tor. Jedoch ist es auch möglich, auf mehreren Seiten eines Rasenabschnittes Tunnelschächte vorzusehen.

Gemäß einer vorteilhaften Ausführungsvorm der erfindungsgemäßen Anlage kann die Höhe des Hauptträgers bzw. des Querelements zusätzlich verstellt werden. Insbesondere kann dies durch Hubelemente stattfinden, welche in den senkrecht zur Rasenfläche stehenden Elementen des Trägers vorliegen können. Somit kann beispielsweise die Beleuchtungshöhe im Bezug zur Rasenoberfläche bei Arbeitsposition 1 auf minimal ca. 50 cm über der Rasenoberfläche nach unten gefahren werden, um die Intensität der Beleuchtung zu erhöhen. Die Ausfahrträger können hierbei dann in Richtung Querelement bewegt werden, um so eine homogene Beleuchtung zu ermöglichen. Der Beleuchtungswinkel wird hierbei so verkürzt, dass bei einer Beleuchtungshöhe von ca. 50 cm über der Rasenoberkante, eine vollständige intensivere Beleuchtung ermöglicht wird. Dieser Vorgang ermöglicht eine kürzere aber dafür intensivere Rasenbeleuchtung z.B. bei einer Neuansaat oder einer Rasenregenerations-Saat, oder bei stark beanspruchen Flächen wie der Tor- oder Strafraum.

Gemäß einer vorteilhaften Ausführungsvorm der erfindungsgemäßen Anlage kann der Träger sich längsseits der Rasenfläche bewegen und wird hierbei vorteilhaft in Führungsschienen gehalten. Bevorzugt wird als Antrieb ein Servomotor verwendet, welcher zudem mit einer Positionierungseinheit ausgestattet werden kann, so dass damit die genaue Position des Trägers bestimmt werden kann.

Gemäß einer vorteilhaften Ausführungsform umfasst der Träger ferner eine Bewässerungsvorrichtung und/oder Düngevorrichtung.

Auch können eine Bewässerungsvorrichtung und/oder die Belichtungsvorrichtung und/oder eine Düngevorrichtung auf separaten Trägern vorliegen. Dies hat zum Vorteil, dass entweder eine gleichzeitige oder eine separate Pflege des Rasens stattfinden kann in Form von gezielter Belichtung, Bewässerung und/oder Düngung bzw. sonstiger Pflegemaßnahmen. Bevorzugt kann jedoch dabei die Bewässerungsvorrichtung und die Düngevorrichtung innerhalb mindestens eines Trägers angeordnet werden, so dass eine homogene und präzise Bewässerung und/oder Düngung der Rasenfläche stattfindet. Vorteilhaft befindet sich bei einer Bewässerungsvorrichtung und/oder Düngevorrichtung, welche im Träger angeordnet sind, eine Saugpumpe im oberen Teil des Trägers, welche aus einem seitlich am Spielfeldrand befindlichen Kanal ein bestimmtes Medium wie beispielsweise Wasser oder eine Düngemischung ziehen kann, welches dann auf dem Spielfeld verteilt wird. In einer vorteilhaften Ausführungsform der Erfindung findet die Verteilung des Mediums über eine Vielzahl von Düsen, welche im Querträger angeordnet sind, statt. Hierbei können vorteilhaft die einzelnen Düsen vollautomatisch unabhängig voneinander geöffnet bzw. geschlossen werden und/oder der Durchmesser der Düse verändert werden. Hierdurch kann eine genaue Dosierung des Mediums stattfinden, sowohl in qualitativer als auch quantitativer und zeitlicher Form. Nach Beendigung der Bewässerung und/oder Düngung können die Düsen pneumatisch gesäubert werden, um sicherzustellen, dass die Bewässerungsleitungen sich immer in einem sauberen Zustand befinden. Mittels der erfindungsgemäßen Bewässerungs- und/oder Düngevorrichtung wird die gesamte Rasenfläche gleichmäßig mit Bewässerungs- bzw. Düngemedium versorgt. Da der Strahl jeweils nur eine kurze Strecke zurücklegt, sind auch die Streuverluste sehr gering, so dass eine optimale Wasserversorgung gewährleistet wird.

In einer weiteren vorteilhaften Ausführungsform der erfindungsgemäßen Anlage weist diese eine Belichtungs- bzw. Beleuchtungsvorrichtung auf, welche an mindestens einem Hauptträger angeordnet ist. Die Beleuchtungsvorrichtung kann hierbei Natriumlampen, Halogen-Metalldampflampen, Gasdruckentladungslampen und/oder LED- und/oder Plasma-Lichttechnik umfassen. Dabei umfasst die Belichtungsvorrichtung den mindestens einen Klappträger, welcher sich im ausgeklappten Zustand in einem 90° Winkel zum Querelement des Hauptträgers befindet, wenn sich dieser in einer dafür vorgesehenen Arbeitsposition 1 befindet. Die Klappträger sind hierbei seitlich scharniert und werden mechanisch oder hydraulisch um 90° ausgeklappt und arretiert. Dieses Ausklappen wird bevorzugt vollautomatisch über beispielsweise eine speicherprogrammierbare Steuerung (SPS) durchgeführt.

Gemäß einer weiteren vorteilhaften Ausführungsform der erfindungsgemäßen Anlage weist die Belichtungsvorrichtung mindestens einen Ausfahrträger auf, welcher entlang der ausgeklappten Klappträger parallel zum Querelement des Hauptträgers bewegbar angeordnet ist. Die Ausfahrträger fahren hierbei beispielsweise in C-Profilen oder Lineareinheiten vom Querträger weg zu ihrer vorgegebenen Position. Hierbei erfolgt der Antrieb bevorzugt über Riemen oder Kettenantriebe mit Servomotor. Auch dieses Ausfahren kann vollautomatisch über beispielsweise eine speicherprogrammierbare Steuerung stattfinden. Weiter weisen die Ausfahrträger Leuchtmittel zur künstlichen Beleuchtung des Rasens auf. Diese Leuchtmittel können Natriumhochdrucklampen und/oder LED-Leuchten umfassen. Die Beleuchtung der Rasenfläche kann ebenfalls über eine speicherprogrammierbare Steuerung gesteuert werden, derart, dass sowohl die gesamte Rasenfläche als auch einzelne Flächenteile beleuchtet werden können.

In einer weiteren vorteilhaften Ausführungsform der erfindungsgemäßen Anlage weist diese Schleifleisten oder Schleppkabel auf, welche in einer oder beiden der Führungsschienen angeordnet sind, um die Anlage mit der erforderlichen Energie beispielsweise in Form von Strom zu versorgen. Hierbei können die zwei seitlichen Führungsschienen auch unterteilt werden, so dass auf einer Seite die Stromzufuhr und auf der anderen Seite die Zufuhr mit dem Bewässerungs- und/oder Düngemedium stattfindet. Die Oberfläche der seitlichen Führungskanäle/-schienen kann mit einer Stahlsegmentkette (Panzerkette) geschlossen werden, die beispielsweise mit Rasen oder mit Kunstrasen bedeckt werden kann.

In einer weiteren vorteilhaften Ausführungsform der erfindungsgemäßen Anlage weist diese Lichtschranken, Segmentfeldkameras, Schlagleisten, Initiatoren, Endschalter und/oder Bewegungssensoren auf, welche beispielsweise als Ein- und Ausgänge in einer speicherprogrammierbaren Steuerung hinterlegt und angesteuert werden können. Dies hat den Vorteil, dass alle Einzelpositionen wie beispielsweise Park- oder Ruhepositionen oder Arbeitspositionen hinterlegt und präzise angesteuert werden können. Darüber hinaus dient dies jedoch in erster Linie dazu, um Kollisionsschäden beispielsweise mit Personen oder Gegenständen auszuschließen.

Gemäß einer weiteren vorteilhaften Ausführungsform der erfindungsgemäßen Anlage weist mindestens ein Hauptträger und/oder Klappträger und/oder Ausfahrträger ein- und ausfahrbare Lamellen auf. Durch die Lamellen kann ein Verbrennen von Rasenfläche durch zu intensive Sonneneinstrahlung verhindert werden. Bevorzugt können die Lamellen hierbei im Winkel zur Sonne je nach Lichteinfall verstellt werden, ähnlich wie bei einer Jalousie am Fenster. Die Lamellen können dabei beispielsweise in C-Profilen oder Lineareinheiten vom Hauptträger weg zu ihrer vorgegebenen Position fahren. Hierbei erfolgt der Antrieb bevorzugt über Riemen oder Kettenantriebe mit Servomotor. Auch dieses Ausfahren kann vollautomatisch über beispielsweise eine speicherprogrammierbare Steuerung stattfinden. Die Winkelverstellung der Lamellen kann dabei über einen mechanischen und/oder elektrischen und/oder motorisierten Antrieb erfolgen, wobei dies ebenfalls mittels speicherprogrammierbarer Steuerung erfolgen kann. Eine solche Steuerung kann beispielsweise auch sensorunterstützt sein, z.B. kann ein Sensor den Einfluss des natürlichen Lichtes messen und anschließend wird dementsprechend die Lamellenausrichtung vollautomatisch bzw. halbautomatisch an die entsprechenden Gegebenheiten angepasst.

In einer weiteren vorteilhaften Ausführungsform der erfindungsgemäßen Anlage weist der Hauptträger einen längs am Querelement verschiebbar angebrachten Roboter auf, welcher als Zeichnungseinheit Spielfeldmarkierungen und/oder Werbe- oder Logobanden auf die Rasenfläche zeichnet. Der Roboter kann beispielsweise mittels Lineareinheiten am Hauptträger befestigt werden und ebenfalls über die speicherprogrammierbare Steuerung voll- oder halbautomatisch bewegt werden. Der Roboter kann hierbei Behälter mit Farbe(n) und/oder Pigmente beispielsweise aus Kalk aufweisen, welche über Düsen oder ähnlichem auf die Rasenfläche aufgebracht werden können.

In einer weiteren vorteilhaften Ausführungsform der erfindungsgemäßen Anlage kann, wenn diese sich in der Arbeitsposition 1 befindet, an den äußersten Klappträgern und an den Ausfahrträgern Rollelemente ähnlich einem Schnelllaufrolltor angebracht werden, die bei Bedarf ein seitliches Zudecken oder Abdecken der gesamten Anlage ermöglicht. Dieses kann mit PVC- oder Gewebevorhängen ermöglicht werden. Ziel ist es, im Zusammenspiel mit den sich oben auf der Anlage befindlichen Lamellen eine Art geschlossenen Klimaraum zu schaffen, in dem dann zusätzlich eine Begasung mit Kohlendioxid (CO₂) für die Photosynthese der Rasenpflanze erfolgen kann. Die Vorhänge können hierbei ebenfalls über Drehmotore automatisch gesenkt oder nach oben gezogen werden. Die Begasung mit Kohlendioxid (CO₂) kann über ein eigens dafür gelegtes System erfolgen. Hierbei kann ein Vorratstank, welcher sich im Hauptträger (Querelement) befindet, vorgesehen werden, oder der Anschluss erfolgt über eine Außenleitung, wobei hier das Kohlendioxid aus einer Flaschenbox zur Begasung angesaugt wird.

Nachfolgend wird die erfindungsgemäße Anlage anhand von Ausführungsbeispielen in Zeichnungen näher beschrieben. Die Erläuterungen sind lediglich beispielhaft und schränken den allgemeinen Erfindungsgedanken nicht ein. Auch ist eine Kombination von verschiedenen Ausführungsbeispielen möglich.

Es zeigen:
- Fig. 1: eine schematische Darstellung der erfindungsgemäßen Anlage;
- Fig. 2: eine schematische Darstellung der erfindungsgemäßen Anlage im Ruheposition 0;
- Fig. 3: eine schematische Darstellung einer Ausführungsform der erfindungsgemäßen Anlage in vorgegebener Arbeitsposition 1;
- Fig. 4: eine schematische Darstellung der erfindungsgemäßen Anlage während des Zustandes einer teilweisen Belichtung der Rasenfläche.

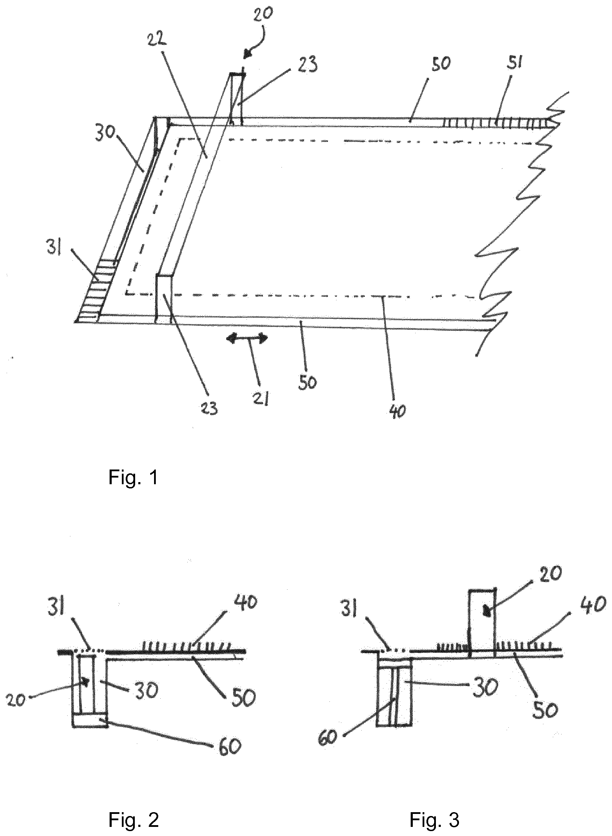

Fig. 1 zeigt eine Ausführungsform der erfindungsgemäßen Anlage 10 in schematischer Darstellung. Zu sehen ist der Hauptträger 20, welcher sich in einer vorgesehenen Arbeitsposition 1 oberhalb der Rasenoberfläche 40 befindet hierbei ein Querelement 22 und senkrechte Elemente 23 aufweist. Weiter zu sehen sind die Führungsschienen 50 mit teilweise geschlossener Führungsschienenabdeckung 51 seitlich der Rasenfläche 40. An einer Seite der Rasenfläche 40 ist der Tunnelschacht 30 mit teilweise geschlossener Schachtabdeckung 31 zu sehen. Darüber hinaus ist die Bewegungsrichtung des Trägers 21 entlang der Rasenfläche 40 angezeigt.

Fig. 2 zeigt eine Ausführungsform der erfindungsgemäßen Anlage 10 in einer Ruheposition 0. Zu sehen ist der Hauptträger 20, welcher sich unterhalb der Rasenoberfläche 40 innerhalb des Tunnelschachts 30 befindet. Der Träger 20 kann jedoch über die Hubelemente 60 wieder aus dem Tunnelschacht 30 herausgefahren werden, um so in eine vorgesehene Arbeitsposition 1 zu gelangen (Fig. 3).

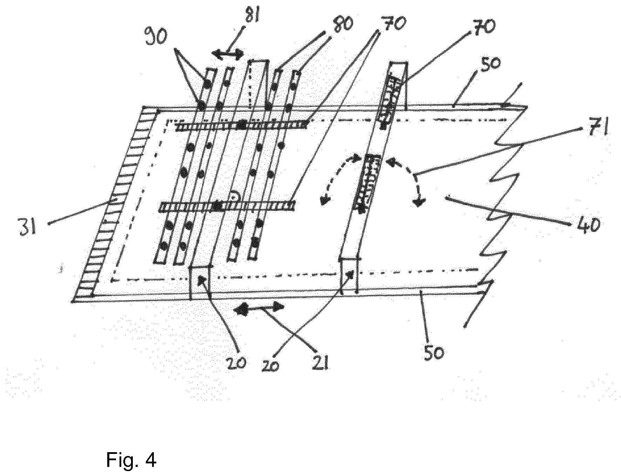

Fig. 4 zeigt eine Ausführungsform der erfindungsgemäßen Anlage 10 bei einer teilweisen Belichtung der Rasenfläche 40. Zu sehen ist ein Hauptträger 20 mit ausgeklappten Klappträgern 70 sowie ausgefahrenen Ausfahrträgern 80, wobei diese Leuchtmittel 90 aufweisen. Ebenfalls dargestellt sind die Bewegungsrichtungen der Träger 21, 71 und 81.

### Bezugszeichenliste

- 10: Anlage
- 20: Hauptträger
- 21: Bewegungsrichtung Hauptträger
- 22: Querelement
- 23: Senkrechtes Element
- 30: Tunnelschacht
- 31: Schachtabdeckung
- 40: Rasenfläche
- 50: Führungsschiene
- 51: Führungsschienenabdeckung
- 60: Hubelement
- 70: Klappträger
- 71: Bewegungsrichtung Klappträger
- 80: Ausfahrträger
- 81: Bewegungsrichtung Ausfahrträger
- 90: Leuchtmittel

## Patentansprüche

1. Anlage zur Belichtung für große Rasenflächen, wie Fußballfelder oder dergleichen umfassend mindestens einen beweglichen Träger zum Anbringen von Beleuchtungselementen, wobei der mindestens eine Träger (20) sich bei einer vorgesehenen Arbeitsposition 1 oberhalb der Rasenoberfläche (40) befindet, wobei der Träger (20) zwei zur Rasenfläche senkrechte Elemente (23) sowie ein Querelement (22) umfasst, welches sich über die Rasenfläche (40) erstreckt, wenn der Träger (20) sich in einer vorgesehenen Arbeitsposition befindet, wobei das Querelement (22) des Trägers (20) über die gesamte Breite der Rasenfläche verläuft, und wobei der Träger (20) eine Belichtungsvorrichtung mit mindestens einem Klappträger (70) umfasst, der sich in ausgeklapptem Zustand in einem 90° Winkel zum Querelement (22) des Trägers (20) befindet, **dadurch gekennzeichnet, dass** der Träger (20) längsseits außerhalb der Rasenfläche derart beweglich angeordnet ist, dass der Träger bei längsseitiger Bewegung den Rasen nicht berührt.

2. Anlage gemäß Anspruch 1, **dadurch gekennzeichnet, dass** die Belichtungsvorrichtung mindestens einen Ausfahrträger (80) aufweist, welcher entlang der ausgeklappten Klappträger (70) parallel zum Querelement (22) des Trägers (20) bewegbar angeordnet ist, und/oder dass die Ausfahrträger (80) Leuchtmittel (90) zur künstlichen Beleuchtung des Rasens aufweist, und/oder dass die Leuchtmittel (90) Natriumlampen, Natrium-Hochdrucklampen, Halogen-Metalldampflampen, Gasdruckentladungslampen und/oder LED- und/oder Plasma-Lichttechnik umfassen.

3. Anlage nach einem der vorhergehenden Ansprüche, **dadurch gekennzeichnet, dass** der Träger (20) am Ende einer Seite des Rasenabschnittes im Boden versenkbar ist und sich der Träger (20) bei einer vorgesehenen Ruheposition 0 unterhalb der Rasenoberfläche und bei einer vorgesehenen Arbeitsposition 1 oberhalb der Rasenoberfläche und über dem Rasenabschnitt befindet, und/oder dass der Träger (20) motorisiert und/oder manuell bewegt wird, und/oder dass der Träger (20) längsseits der Rasenfläche (40) in Führungsschienen (50) gehalten wird, und/oder dass die senkrechten Elemente (23) höhenverstellbare Hubsegmente aufweisen, wodurch sich die Höhe des Querelements (22) des Trägers (20) einstellen lässt.

4. Anlage nach einem vorhergehenden Anspruch, **dadurch gekennzeichnet, dass** die Anlage (10) vollautomatisch oder halbautomatisch betrieben wird und/oder dass die Anlage (10) einen Tunnelschacht (30) aufweist, in welchen der Träger (20) versenkbar ist.

5. Anlage nach Anspruch 3, **dadurch gekennzeichnet, dass** der Tunnelschacht (30) eine Schachtabdeckung (31) aufweist, welche hydraulisch und/oder mechanisch, vollautomatisch und/oder halbautomatisch geöffnet bzw. geschlossen wird und/oder dass der Tunnelschacht (31) Hubsegmente aufweist, welche den Träger (20) in seine Arbeitsposition 1 oder Parkposition 0 bringen.

6. Anlage nach einem der vorhergehenden Ansprüche, **dadurch gekennzeichnet, dass** der Träger (20) ferner eine Bewässerungsvorrichtung und/oder Düngevorrichtung umfasst, und/oder dass die Bewässerungsvorrichtung und/oder die Düngevorrichtung derart im Träger (20) angeordnet ist, dass eine homogene und präzise Bewässerung und/oder Düngung der Rasenfläche (40) stattfindet, und/oder dass die Bewässerungs- und/oder Düngevorrichtung Düsen umfasst, welche vollautomatisch geöffnet oder geschlossen werden können, und/oder dass die Düsen pneumatisch gesäubert werden.

7. Anlage gemäß einem der vorhergehenden Ansprüche, **dadurch gekennzeichnet, dass** die Anlage (10) Lichtschranken, Segmentfeldkameras, Schlagleisten und/oder Bewegungssensoren aufweist, und/oder dass der Träger (20) einen längs des Querelements (22) verschiebbaren Roboter aufweist, welcher als Zeichnungseinheit Spielfeldmarkierungen und/oder Werbe- oder Logobanden auf die Rasenfläche (40) zeichnet.

8. Anlage gemäß einem der vorhergehenden Ansprüche, **dadurch gekennzeichnet, dass** der Träger (20), die Klappträger (70) und/oder die Ausfahrträger (80) ein- und ausfahrbare Lamellen aufweist, und/oder dass die Lamellen im Winkel zur Sonne je nach Lichteinfall verstellt werden, um ein Verbrennen von Rasenfläche (40) durch zu intensive Sonneneinstrahlung zu verhindern.

9. Anlage gemäß einem der vorhergehenden Ansprüche, **dadurch gekennzeichnet, dass** die Anlage an den äußersten Klappträgern (70) und/oder an den Ausfahrträgern (80) Rollelemente aufweist, wodurch bei Bedarf die gesamte Anlage seitlich abdeckbar ist und/oder dass zusätzlich mit den sich oben auf der Anlage befindlichen Lamellen eine Art geschlossenen Klimaraum geschaffen wird, in dem dann zusätzlich eine Begasung mit Kohlendioxid (CO₂) für die Photosynthese der Rasenpflanze erfolgt, wobei die Begasung mit Kohlendioxid über ein eigens dafür gelegtes System erfolgt und/oder die Begasung über ein Vorratstank erfolgt, welcher sich im Hauptträger befindet und/oder die Begasung über eine Außenleitung erfolgt, wobei hier das Kohlendioxid aus einer Flaschenbox zur Begasung angesaugt wird.

## Claims

1. A system for illumination of large lawns, such as soccer fields or the like, comprising at least one movable support for mounting lighting elements, wherein the at least one support (20) is located at an intended working position 1 above the lawn surface (40), wherein the support (20) comprises two elements (23) perpendicular to the lawn surface and a transverse element (22), which extends above the lawn surface (40) when the support (20) is located at an intended working position, wherein the transverse element (22) of the support (20) runs over the entire width of the lawn surface, and wherein the support (20) comprises a lighting device with at least one folding bracket (70), which, in the extended state, is at a 90° angle to the transverse element (22) of the support (20), **characterized in that** the support (20) is movably arranged lengthwise outside of the lawn surface such that the support does not touch the lawn during lengthwise movement.

2. The system of claim 1, **characterized in that** the lighting device has at least one extension support (80), which is movably arranged along the extended folding bracket (70) parallel to the transverse element (22) of the support (20) and/or that the extension support (80) has lighting means (90) for artificially illuminating the lawn, and/or that the lighting means (90) comprise sodium lamps, high-pressure sodium lamps, halogen-metal vapor lamps, pressurized gas discharge lamps and/or LED and/or plasma lighting technology.

3. The system of any one of the preceding claims, **characterized in that** the support (20) can be lowered to the ground at the end of one side of the lawn section and that the support (20), when in an intended resting position 0, is located beneath the lawn surface and, when in an intended operating position 1, is located above the lawn surface, and/or that the support (20) is moved by motorized means and/or manually, and/or that the support (20) is held in guide rails (50) alongside the lawn surface (40), and/or that the perpendicular elements (23) have height-adjustable lifting segments, via which the height of the transverse element (22) of the support (20)can be adjusted.

4. The system of any one of the preceding claims, **characterized in that** the system (10) is operated fully automatically or semiautomatically and/or that the system (10) has a tunnel shaft (30) into which the support (20) can be lowered.

5. The system of claim 3, **characterized in that** the tunnel shaft (30) has a shaft cover (31), which can be opened and closed fully automatically and/or semiautomatically and/or that the tunnel shaft (31) has lifting segments which bring the support (20) into its operating position 1 or parked position 0.

6. The unit of any one of the preceding claims, **characterized in that** the support (20) also comprises a watering device and/or a fertilizing device, and/or that the watering device and/or the fertilizing device is arranged in the support (20) such that homogeneous and precise watering or fertilizing of the lawn surface (40) takes place, and/or that the watering and/or fertilizing device comprises nozzles that can be fully opened or closed automatically, and/or that the nozzles are cleaned pneumatically.

7. The unit of any one of the preceding claims, **characterized in that** the unit (10) has photosensors, field segment cameras, baffle plates and/or movement sensors, and/or that the support (20) has a robot movable along the transverse element (22) which, as a drawing element, draws playing field markings and/or advertising or logo bands on the lawn area (40).

8. The unit of any one of the preceding claims, **characterized in that** the support (20), the folding bracket (70) and/or the extension support (80) has lamellae that can be made to move in and out, and/or that the lamellae can be moved at an angle to the sun depending on the incident angle of the light, to prevent burning of the lawn area (40) by excessively intense solar irradiation.

9. The unit of any one of the preceding claims, **characterized in that** the unit has roller elements on the outermost folding bracket (70) and/or on the extension support (80), by means of which the entire unit can be covered on the sides if necessary and/or additionally, with the aid of lamellae located on top of the unit, a type of closed climate-controlled chamber is created, in which gassing with carbon dioxide (CO₂) for the photosynthesis of the lawn plants additionally takes place, wherein the gassing with carbon dioxide takes place by means of a system specially provided for it and/or the gassing takes place by means of a storage tank located in the main girder, and/or the gassing takes place by means of an external line, wherein in this case the carbon dioxide for gassing is drawn in from a bottle rack.

## Revendications

1. Dispositif d'éclairage pour grandes surfaces de gazon, telles que des terrains de football ou similaires, comprenant au moins un support mobile pour fixer des éléments d'éclairage, dans lequel l'au moins un support (20) est situé, dans une position de travail 1 prévue, au-dessus de la surface de gazon (40), dans lequel le support (20) comprend deux éléments (23) perpendiculaires au gazon ainsi qu'un élément transversal (22) qui s'étend sur la surface de gazon (40) lorsque le support (20) est dans une position de travail prévue, dans lequel l'élément transversal (22) du support (20) s'étend sur toute la largeur de la surface de gazon et dans lequel le support (20) comprend un dispositif d'éclairage avec au moins un support rabattable (70) qui, à l'état rabattu, est à un angle de 90° par rapport à l'élément transversal (22) du support (20), **caractérisé en ce que** le support (20) est agencé de manière mobile longitudinalement à l'extérieur de la surface de gazon de sorte que le support ne touche pas le gazon pendant le mouvement longitudinal.

2. Dispositif selon la revendication 1, **caractérisé en ce que** le dispositif d'éclairage présente au moins un support d'extension (80) qui est agencé de manière mobile le long du support rabattable rabattu (70) parallèlement à l'élément transversal (22) du support (20), et/ou que les supports d'extension (80) présente des moyens d'éclairage (90) pour l'éclairage artificiel du gazon, et/ou que les moyens d'éclairage (90) comprennent des lampes au sodium, des lampes au sodium à haute pression, des lampes aux halogénures métalliques, des lampes à décharge à pression de gaz et/ou ou une technologie d'éclairage DEL et/ou plasma.

3. Dispositif selon l'une des revendications précédentes, **caractérisé en ce que** le support (20) peut être abaissé dans le sol à l'extrémité d'un côté de la section de gazon et que le support (20) est situé sous la surface du gazon dans une position de repos 0 prévue et au-dessus de la surface de gazon et au-dessus de la section de gazon dans une position de travail 1 prévue, et/ou que le support (20) est motorisé et/ou déplacé manuellement, et/ou que le support (20) est maintenu dans des rails de guidage (50) le long de la surface de gazon (40), et/ou **en ce que** les éléments (23) perpendiculaires présentent des segments de levage réglables en hauteur, moyennant quoi la hauteur de l'élément transversal (22) du support (20) peut être réglée.

4. Dispositif selon une revendication précédente, **caractérisé en ce que** le dispositif (10) est actionné de manière entièrement automatique ou semi-automatique et/ou **en ce que** le dispositif (10) présente une entrée de tunnel (30) dans lequel le support (20) peut être abaissé.

5. Dispositif selon la revendication 3, **caractérisé en ce que** l'entrée de tunnel (30) présente un couvercle d'entrée (31) qui est ouvert ou fermé hydrauliquement et/ou mécaniquement, de manière entièrement automatique et/ou semi-automatique et/ou que le couvercle d'entrée (31) présente des segments de levage qui amènent le support (20) dans sa position de travail 1 ou sa position de repos 0.

6. Dispositif selon l'une des revendications précédentes, **caractérisé en ce que** le support (20) comprend en outre un dispositif d'irrigation et/ou de fertilisation, et/ou que le dispositif d'irrigation et/ou le dispositif de fertilisation est disposé dans le support (20) de sorte que la surface de gazon (40) est irriguée et/ou fertilisée de manière homogène et précise, et/ou que le dispositif d'irrigation et/ou de fertilisation comprend des buses qui peuvent être ouvertes ou fermées de manière entièrement automatique, et/ou que les buses sont nettoyées pneumatiquement.

7. Dispositif selon l'une des revendications précédentes, **caractérisé en ce que** le dispositif (10) présente des barrières lumineuses, des caméras à champ segmenté, des battoirs et/ou des capteurs de mouvement, et/ou que le support (20) présente un robot qui peut être déplacé le long de l'élément transversal (22) qui, en tant qu'unité de dessin, dessine des marques de terrain et/ou des panneaux publicitaires ou de logo sur la surface de gazon (40).

8. Dispositif selon l'une des revendications précédentes, **caractérisé en ce que** le support (20), les supports rabattables (70) et/ou les supports d'extension (80) présentent des lattes escamotables et extensibles, et/ou que les lattes sont inclinées par rapport au soleil en fonction de l'incidence de la lumière pour éviter de brûler le gazon (40) en raison d'un ensoleillement intense.

9. Dispositif selon l'une des revendications précédentes, **caractérisé en ce que** le dispositif présente des éléments roulants sur les supports rabattables les plus à l'extérieur (70) et/ou sur les supports d'extension (80), moyennant quoi l'ensemble du dispositif peut être recouvert latéralement si nécessaire, et/ou **en ce que**, de plus, une sorte d'espace climatique fermé est créé avec les lamelles se trouvant en haut sur le système, espace dans lequel un gazage supplémentaire avec du dioxyde de carbone (CO₂) pour la photosynthèse des plantes à gazon a lieu, dans lequel le gazage avec du dioxyde de carbone a lieu via un système spécialement conçu à cet effet et/ou le gazage a lieu via un réservoir de stockage qui est situé dans le transporteur principal et/ou le gazage a lieu via une conduite externe, dans lequel le dioxyde de carbone y est aspiré à partir d'une boîte à bouteilles pour le gazage.
